# FASCICULE DE BREVET EUROPEEN

(11) **EP 3 287 857 B1**
(45) Date de publication et mention de la délivrance du brevet: **03.04.2019**
(21) Numéro de dépôt: 16185922.8
(22) Date de dépôt: 26.08.2016
(51) Int. Cl.: G04B 37/22, G04B 45/00, C04B 35/48, C04B 41/45, C04B 35/486, C04B 41/00, C04B 41/50, C04B 41/87, C23C 8/06, C23C 8/80

(54) **PROCÉDÉ D'OBTENTION D'UN ARTICLE À BASE DE ZIRCONE AYANT UN ASPECT MÉTALLIQUE**
HERSTELLUNGSVERFAHREN EINES ARTIKELS AUF ZIRKONBASIS, DER EIN METALLISCHES AUSSEHEN HAT
METHOD FOR OBTAINING A ZIRCONIA ITEM HAVING A METALLIC APPEARANCE

(43) Date de publication de la demande: 28.02.2018
(73) Titulaire: The Swatch Group Research and Development Ltd., 2074 Marin (CH)
(72) Inventeur: Faure, Cédric, 2016 Cortaillod (CH); Curchod, Loïc, 1004 Lausanne (CH)
(74) Mandataire: Goulette, Ludivine

(56) Documents cités:
- EP-A1- 0 947 486
- EP-A1- 0 947 490
- SE-B- 455 195
- US-A- 5 690 887

## Description

La présente invention concerne un article à base de zircone, notamment frittée, et en particulier un tel article dont la structure chimique est transformée sur une partie de son épaisseur pour conférer à cet article une surface extérieure ayant un aspect métallique ainsi qu'une conductivité électrique non-nulle. L'invention concerne également une utilisation d'un tel article, comme élément d'habillage d'un article tel qu'une montre-bracelet, un bijou ou tout autre article de l'industrie du luxe pouvant faire appel à ce genre de produit, en particulier pour réaliser des éléments de construction de boîtes de montre ou de bracelets. La présente invention concerne enfin un procédé d'obtention d'un tel article.

### ART ANTERIEUR

Parmi tous les matériaux connus, les métaux sont très largement utilisés à cause de certaines propriétés très intéressantes : grande résistance mécanique, ténacité élevée, conductivité électrique, etc. En outre, leur éclat caractéristique est très recherché pour les applications décoratives. Leur dureté est toutefois inférieure à celle des céramiques, ce qui peut conduire à une usure et une corrosion importantes dans de nombreuses conditions d'utilisation courantes, par exemple lorsque ces matériaux sont utilisés pour réaliser des pièces d'habillage d'horlogerie comme des boîtes de montre ou des bracelets.

Il est connu des procédés de mise en forme et de polissage de céramiques afin d'obtenir des pièces d'habillage dont la dureté ainsi que la résistance à l'usure et à la corrosion sont largement supérieures à celles des métaux.

Il est connu un procédé pour modifier une telle pièce en céramique à base de zircone (ZrO₂) dans le but de lui conférer des propriétés métalliques dont une couleur grise et une brillance proches de celles du platine ainsi qu'une conductivité de surface non-nulle, tout en conservant sa dureté et sa résistance à l'usure et à la corrosion supérieures à celles des métaux. Ce procédé permet l'obtention d'un article en zircone fini ou semi-fini ayant un coeur en ZrO₂ partiellement réduit et un aspect extérieur métallique. Il comprend les étapes consistant à :
- se munir d'au moins un article en zircone préalablement conformé dans sa forme finie ou semi-finie;
- disposer ledit article dans une enceinte dans laquelle on crée un plasma obtenu à partir d'un mélange d'hydrogène, d'un gaz neutre, et de traces de carbone, et
- maintenir ledit article à proximité du plasma pendant un temps d'environ 15 à 240 minutes, la température moyenne de l'article s'établissant dans ces conditions entre environ 600 et 1'300 °C, afin d'obtenir une diffusion des atomes de carbone dans ledit article.

Un tel procédé permet ainsi de produire une pièce en zircone ayant une couche extérieure en carbure de zirconium ZrC avec un aspect et des propriétés métalliques, i.e. une surface brillante et conductrice, tout en conservant ses propriétés avantageuses par rapport à une pièce en métal.

Aussi, avantageusement par rapport à des procédés de dépôts de couches minces décoratives d'aspect métallique par PVD ou CVD ou d'autres méthodes de déposition, la couche extérieure d'aspect métallique produite par ce procédé de carburation est solidaire du coeur de la pièce, résultant en une accroche parfaite de la couche avec un risque de délaminage nul.

Finalement, ce procédé permet d'obtenir des pièces finies ou semi-finies avec les propriétés avantageuses du carbure de zirconium ZrC sur sa surface sans devoir produire des pièces en ZrC massif, ce qui impliquerait des procédés de frittage à haute température, éventuellement sous pression. Aussi, le ZrC est plus de 10% plus dense que le ZrO₂, de sorte que des pièces en ZrO₂ carburées par le procédé susmentionné sont plus légères que des pièces de même géométrie en ZrC massif. Enfin, le ZrC étant beaucoup plus dur (typiquement 25 GPa) que le ZrO₂ (typiquement 13 GPa), des pièces en ZrC massif seraient beaucoup plus dures à usiner et polir après frittage que les mêmes pièces en ZrO₂. Le procédé susmentionné pallie ces problèmes, notamment en permettant de reporter la transformation de la surface de la pièce en ZrC après l'usinage et le polissage de la pièce en ZrO₂.

Ce procédé peut être adapté pour obtenir une couche de nitrure de zirconium ayant aussi un aspect métallique et une conductivité électrique non-nulle ainsi qu'une accroche parfaite, mais de couleur jaune proche de l'or. Pour cela, le plasma est obtenu à partir d'un mélange d'hydrogène, d'un gaz neutre, et de traces d'azote.

Toutefois, les procédés plasma utilisés présentent l'inconvénient de produire des suies. Or, ces suies sont considérées comme étant salissantes et abrasives puisque faites de particules issues du traitement plasma. Or, ces particules peuvent être dommageables pour la pièce en zircone lors de la manipulation desdites pièces sur lesquelles la suie s'est déposée. EP0947490 A1 décrit un tel procédé dans lequel un plasma est produit entre une cathode et une anode se trouvant dans l'enceinte. EP0947486 A1 décrit un procédé dans lequel une pièce à base de zircone est fritter puis chauffée entre 700°C et 1350°C dans une atmosphère comportant un mélange d'azote et d'hydrogène.

### RESUME DE L'INVENTION

L'invention a pour but de remédier aux inconvénients de l'art antérieur en fournissant un procédé d'obtention d'un article en zircone permettant la formation de couches de carbure ou nitrure de zirconium sur l'épaisseur de sa surface avec les mêmes propriétés esthétiques, électriques et de résistance mécanique et chimique que les couches obtenues par procédé plasma, mais sans formation de suies abrasives.

A cet effet, l'invention a pour objet un procédé d'obtention d'un article fini ou semi-fini à base de zircone, l'article ayant un aspect extérieur métallique et une conductivité électrique non-nulle en surface, caractérisé en ce qu'il comprend les étapes consistant à :
- se munir d'au moins un article en zircone préalablement conformé dans sa forme finie ou semi-finie;
- disposer ledit article dans une enceinte dans laquelle un mélange de gaz à base d'hydrogène et de carbone/azote est chauffé par au moins un élément résistif, par exemple au moins un filament, réalisé en métal réfractaire et traversé par un courant électrique, et
- chauffer le mélange de gaz jusqu'à obtenir une dissociation des molécules des gaz à base d'hydrogène et de carbone ou azote et maintenir ledit article dans l'enceinte contenant les gaz chauffés pour le chauffer aussi et obtenir une diffusion des atomes de carbone/azote dans ledit article.

Le procédé selon l'invention utilise avantageusement des moyens de chauffage qui évitent la formation de suies pouvant entrainer des rayures lors de la manipulation des articles traités.

Dans un premier mode de réalisation avantageux, le procédé comprend en outre, pendant l'étape de chauffage des gaz contenus dans l'enceinte et ensuite pendant l'étape du traitement de carburation/nitruration à proprement parler, une diffusion de l'oxygène contenu dans ledit article en zircone vers la surface pour le quitter.

Le procédé selon l'invention comprend en outre, préalablement à l'étape de chauffage des gaz contenus dans l'enceinte, une étape de réduction consistant à placer ledit article dans une enceinte secondaire dans laquelle du dihydrogène est injecté et à chauffer ce dihydrogène et l'article disposé dans l'enceinte permettant ainsi la dissociation du dihydrogène et la diffusion de l'oxygène contenu dans ledit article en zircone vers la surface pour le quitter.

Dans un deuxième mode de réalisation avantageux, l'épaisseur de la couche transformée sur la surface extérieure dudit article est comprise environ entre 10 et 1'000 nm.

Dans un troisième mode de réalisation avantageux, l'épaisseur de la surface extérieure est comprise environ entre 20 et 200 nm.

Dans un quatrième mode de réalisation avantageux, ledit au moins un élément résistif est réalisé dans un métal réfractaire choisi dans la liste comprenant le Niobium, le Molybdène, le Tantale, le Tungstène et le Rhénium.

Dans un cinquième mode de réalisation avantageux, ledit au moins un élément résistif en métal réfractaire est un filament.

Dans un sixième mode de réalisation avantageux, ladite enceinte comprend un seul élément résistif agencé dans l'enceinte pour chauffer les gaz du procédé et les articles à traiter de façon homogène.

Dans un septième mode de réalisation avantageux, ladite enceinte comprend une pluralité d'éléments résistifs répartis dans l'enceinte pour chauffer les gaz du procédé et les articles à traiter de façon homogène.

Dans un huitième mode de réalisation avantageux, au moins un des gaz de procédé est injecté via les éléments résistifs chauffés par le courant électrique les traversant et qui comprennent alors dans leur volume un réseau de conduites pour la circulation dudit gaz de procédé, au lieu d'être injecté autour desdits éléments résistifs via un système d'injection dédié, et cela afin d'augmenter l'efficacité de dissociation dudit gaz de procédé et de profiter de la configuration des éléments résistifs dans l'enceinte pour assurer une répartition de l'injection dudit gaz réactif résultant en un procédé homogène sur toute la charge.

Dans un neuvième mode de réalisation, au moins un des gaz de procédé est dissocié séparément par tout moyen connu de l'homme du métier avant d'être injecté dans l'enceinte principale afin de se mélanger aux autres gaz de procédé pour produire l'atmosphère réactive nécessaire au procédé.

### BREVE DESCRIPTION DES FIGURES

Les buts, avantages et caractéristiques du dispositif selon la présente invention apparaîtront plus clairement dans la description détaillée suivante d'au moins une forme de réalisation de l'invention donnée uniquement à titre d'exemple non limitatif et illustrée par les dessins annexés sur lesquels :
- La figure 1 représente schématiquement l'article selon l'invention;
- La figure 2 représente schématiquement l'enceinte permettant d'opérer le procédé selon l'invention;
- Les figures 3 et 4 représentent schématiquement des agencements des filaments dans l'enceinte selon l'invention.

### DESCRIPTION DETAILLEE

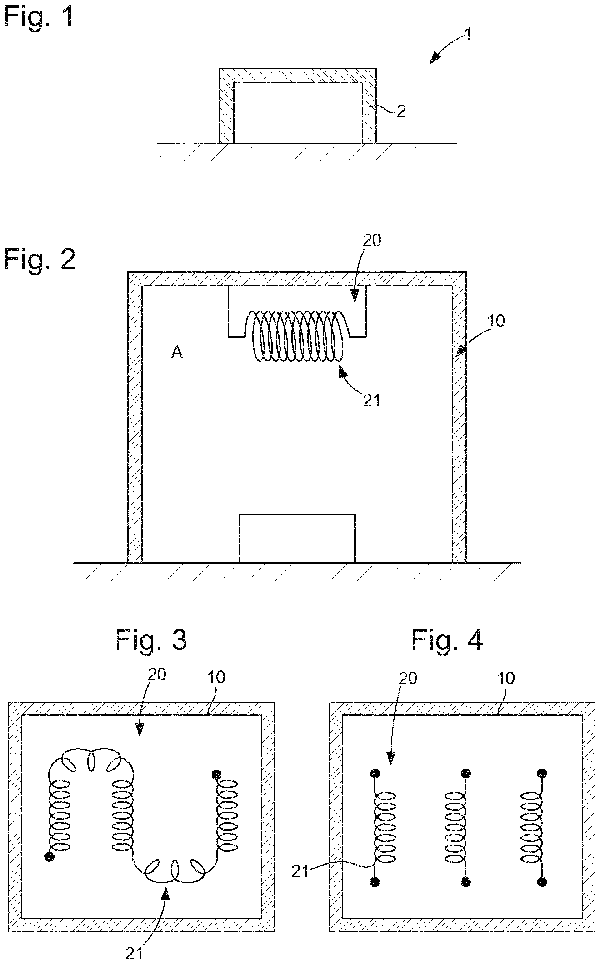

A titre d'exemple sur la figure 1, on se munit d'un objet de départ formé par un article 1 en zircone ayant une configuration cristallographique tétragonale (oxyde de zirconium, ZrO₂) de couleur blanche et qui est réalisé selon les techniques usuelles de fabrication d'articles en céramique, par exemple par frittage.

Cet article peut être un produit fini ayant la forme finale dans laquelle il va être utilisé, par exemple une pièce de forme généralement parallélépipédique ayant déjà subi un polissage miroir et destinée à constituer un élément de l'habillage d'une montre, par exemple un maillon de bracelet. Bien entendu, le cas échéant, l'article peut être un produit semi-fini sur lequel des opérations d'usinage ultérieures pourront être réalisées afin d'adapter cet article à son utilisation finale. L'article 1 pourra être une partie d'une montre ou d'un bijou ou de tout article lié à l'industrie du luxe pouvant faire appel à ce genre d'élément d'habillage.

Cet article est ensuite introduit dans une enceinte 10 dans laquelle il sera traité comme visible à la figure 2. Le traitement qui sera appliqué est un traitement de carburation ou de nitruration. Un point essentiel du procédé est qu'il s'agit d'une transformation de la surface de l'article sur une faible épaisseur, de l'ordre de 10 à 1'000 nm, la zircone (oxyde de zirconium) dans la région extérieure 2 visible à la figure 1 étant transformée en carbure/nitrure de zirconium ayant un aspect métallique. Il s'agit donc d'une modification superficielle de la structure de la zircone en une nouvelle structure cristallographique correspondant à celle du carbure/nitrure de zirconium et non d'un revêtement rapporté susceptible d'être arraché ou de se désolidariser de la surface de l'article, notamment lorsque celui-ci est soumis à des conditions d'usure importante. Plus particulièrement, la région extérieure 2 de la couche superficielle qui présente la structure du carbure/nitrure de zirconium s'étend à partir de la surface sur une profondeur comprise entre 20 et 200 nm.

Pour effectuer un traitement de carburation ou de nitruration, il est nécessaire que l'enceinte 10 renferme une atmosphère A chargée en gaz contenant de l'hydrogène et du carbone ou de l'azote et soit munie de moyens de chauffage 20, ces moyens de chauffage permettant d'activer le traitement.

Selon l'invention, les moyens de chauffage comprennent au moins un élément résistif. Cet élément résistif est, dans un premier mode d'exécution, un filament 21 réalisé en métal réfractaire. Un tel métal réfractaire est choisi dans la liste comprenant le Niobium, le Molybdène, le Tantale, le Tungstène et le Rhénium. En effet, les moyens de chauffage 20 peuvent comprendre un seul filament 21, de grande taille, agencé dans ladite enceinte pour chauffer les gaz de procédé et les articles à traiter de façon homogène ou alors une multitude de filaments indépendants répartis pour assurer une distribution de chaleur homogène comme visible aux figures 3 et 4 respectivement.

Ce ou ces filaments sont parcourus par un courant électrique entrainant, par effet Joule, une élévation de température des filaments. Cette élévation de température est idéalement réalisée pour atteindre une température du ou des filaments supérieure à 1500°C.

L'élévation de température de l'atmosphère dans l'enceinte permet que le traitement de l'article en zircone puisse avoir lieu. En effet, cette élévation de la température de l'atmosphère de l'enceinte entraine une dissociation des gaz de sorte que les atomes d'hydrogène H et de carbone C ou d'azote N soient libres, et une élévation de la température de la pièce en zircone. Sous l'effet de la chaleur et de l'atmosphère d'hydrogène, une partie de l'oxygène contenu dans la zircone diffuse vers la surface pour quitter la zircone.

Cette réduction partielle de la zircone par diffusion d'une partie de son oxygène vers sa surface est concomitante à une diffusion des atomes de carbone ou d'azote de la surface vers le coeur de l'article. En effet, sous l'effet de la chaleur, les atomes de carbone ou d'azote dissociés du mélange de gaz de l'enceinte vont diffuser dans la zircone partiellement réduite. Cette diffusion des atomes de carbone ou d'azote entraine l'apparition d'une couche superficielle de ces atomes recombinés avec la zircone partiellement réduite pour obtenir une couche de carbure de zirconium ou de nitrure de zirconium.

Selon une caractéristique de l'article selon l'invention, la couche superficielle comprend une région de transition située entre le coeur en zircone partiellement réduite et la région extérieure carburée/nitrurée, ladite région de transition comprenant des oxycarbures/oxynitrures de zirconium. On remarque donc que la composition chimique de la couche superficielle varie en fonction de la profondeur mesurée à partir de la surface de l'article et passe de façon continue du carbure/nitrure de zirconium stoechiométrique (ZrC/ZrN) en surface à une région de transition comprenant des oxycarbures/oxynitrures de zirconium, puis finalement au coeur de la pièce en oxyde de zirconium sous-stoechiométrique (zircone réduite).

Selon une autre caractéristique préférée de l'invention, la teneur en carbone/azote des oxycarbures/oxynitrures de zirconium dans la région de transition diminue avec la profondeur tandis que leur teneur en oxygène augmente avec la profondeur. La région de transition comprend donc des oxycarbures/oxynitrures de zirconium dont la teneur en carbone/azote diminue graduellement lorsque l'on progresse vers le coeur de l'article alors que la présence d'oxygène augmente progressivement sous la forme de composés du type ZrOₓC_{y}/ZrOₓN_{y}, pour atteindre progressivement le coeur de l'article qui est constitué essentiellement de zircone partiellement réduite du type ZrO₂₋ₓ. On comprendra bien entendu que la transition entre ces diverses régions se fait graduellement.

Les articles obtenus par ce procédé acquièrent certaines nouvelles propriétés, notamment une conductivité électrique non-nulle en surface, une couleur proche du platine (carburation) ou de l'or jaune (nitruration) et un éclat métallique tout en conservant les propriétés des céramiques, en particulier leur très grande dureté ainsi que leur résistance à l'usure et à la corrosion.

Cette utilisation d'éléments résistifs chauffés par un courant électrique présente l'avantage de ne pas produire de suies comme la méthode plasma. Ces suies produites en utilisant la méthode plasma sont salissantes et abrasives de sorte que la manipulation de l'article couvert de suies peut entrainer l'apparition de rayures sur ledit article.

Dans un second mode d'exécution, le ou les éléments résistifs se présentent sous la forme de conduites faites dans un matériau résistif dans lesquelles au moins un des gaz utilisés dans le procédé circule, le solde des gaz utilisés dans le procédé pouvant être injecté par un second système de distribution. Lorsque la conduite est parcourue par un courant électrique, elle se met à chauffer l'atmosphère de l'enceinte ainsi que ledit au moins un gaz de procédé circulant dans ladite conduite. Des ouvertures dans ladite conduite permettent de libérer/injecter ledit gaz de procédé dans l'enceinte. Ce second mode d'exécution permet d'augmenter l'efficacité de dissociation du ou des gaz utilisés dans le procédé et de profiter de la configuration des éléments résistifs dans l'enceinte pour assurer une répartition de l'injection du gaz réactif résultant en un procédé homogène sur toute la charge..

Selon l'invention il est prévu une étape préliminaire de réduction de la zircone. Cette étape de réduction est réalisée avant l'étape de carburation/nitruration et consiste à placer ledit article dans une enceinte d'atmosphère dans laquelle du dihydrogène H₂ est injecté. L'atmosphère dans l'enceinte est chauffée de sorte que l'article présente une élévation de température entrainant une diffusion de l'oxygène contenu dans la zircone vers sa surface pour quitter la zircone.

Cette étape de réduction peut être réalisée dans une enceinte spécifique ou dans la même enceinte que l'opération de carburation/nitruration. Dans ce cas-là, l'enceinte comprend des moyens pour modifier la nature de l'atmosphère dans ladite enceinte.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Procédé d'obtention d'un article (1) fini ou semi-fini à base de zircone, l'article ayant un aspect extérieur métallique et une conductivité électrique non-nulle en surface, **caractérisé en ce qu'**il comprend les étapes consistant à :
- se munir d'au moins un article (1) en zircone préalablement conformé dans sa forme finie ou semi-finie;
- disposer ledit article dans une enceinte (10) dans laquelle un mélange de gaz comprend des atomes d'hydrogène et de carbone ou des atomes d'hydrogène et d'azote, le mélange de gaz étant chauffé par au moins un élément résistif (20) réalisé en matériau conducteur et traversé par un courant électrique, et
- chauffer le mélange de gaz dans l'enceinte jusqu'à obtenir une dissociation des molécules des gaz à base d'hydrogène et de carbone ou azote et maintenir ledit article dans l'atmosphère réactive ainsi créée pour le chauffer et avoir une diffusion des atomes de carbone ou azote dans la surface extérieure (2) dudit article,
et **en ce que** le procédé comprend préalablement à l'étape de chauffage des gaz de procédé contenus dans l'enceinte, une étape de réduction consistant à placer ledit article dans une enceinte dans laquelle du dihydrogène est injecté et à chauffer ce dihydrogène permettant la diffusion de l'oxygène contenu dans ledit article en zircone vers sa surface pour le quitter.

2. Procédé selon la revendication 1, **caractérisé en ce qu'**il comprend en outre, pendant l'étape de chauffage des gaz contenus dans l'enceinte, une diffusion de l'oxygène contenu dans ledit article en zircone vers sa surface pour le quitter.

3. Procédé selon l'une des revendications 1 ou 2, **caractérisé en ce que** l'épaisseur de la couche transformée sur la surface extérieure (2) dudit article est comprise entre 10 et 1'000 nm.

4. Procédé selon la revendication 3, **caractérisé en ce que** l'épaisseur de la couche transformée sur la surface extérieure dudit article est comprise entre 20 et 200 nm.

5. Procédé selon l'une des revendications précédentes, **caractérisé en ce que** ledit élément résistif est réalisé dans un métal réfractaire choisi dans la liste comprenant le Niobium, le Molybdène, le Tantale, le Tungstène et le Rhénium.

6. Procédé selon l'une des revendications précédentes, **caractérisé en ce que** ledit élément résistif est un filament (21).

7. Procédé selon l'une des revendications précédentes, **caractérisé en ce que** ladite enceinte comprend un seul élément résistif agencé dans l'enceinte pour chauffer les gaz du procédé et les articles à traiter de façon à carburer ou nitrurer les articles de manière homogène.

8. Procédé selon l'une des revendications 1 à 5, **caractérisé en ce que** ladite enceinte comprend une pluralité d'éléments résistifs répartis dans l'enceinte pour chauffer les gaz du procédé et les articles à traiter de façon à carburer ou nitrurer les articles de manière homogène.

9. Procédé selon l'une des revendications 1 à 5, **caractérisé en ce qu'**au moins un des gaz de procédé est injecté via au moins un élément résistif chauffé par le courant électrique les traversant.

10. Procédé selon l'une des revendications 1 à 5, **caractérisé en ce qu'**au moins un des gaz de procédé est dissocié avant d'être injecté dans l'enceinte principale.

## Patentansprüche

1. Verfahren zur Herstellung eines fertigen oder halbfertigen Gegenstands auf Zirkonoxidbasis, wobei der Gegenstand ein metallisches äußeres Erscheinungsbild und an der Oberfläche eine elektrische Leitfähigkeit ungleich null besitzt, **dadurch gekennzeichnet, dass** es die folgenden Schritte umfasst:
- Bereitstellen mindestens eines Gegenstands (1) aus Zirkonoxid, der vorher seine fertige oder halbfertige Form erhalten hat;
- Platzieren des Gegenstands in einem Behälter (10), in dem ein Gasgemisch Wasserstoff- und Kohlenstoffatome oder Wasserstoff- und Stickstoffatome enthält, wobei das Gasgemisch durch mindestens ein Widerstandselement (20) erhitzt wird, das aus einem leitenden Material hergestellt ist und von einem elektrischen Strom durchflossen wird, und
- Erhitzen des Gasgemisches in dem Behälter, bis die Moleküle der Gase auf Wasserstoff- und Kohlenstoff- oder Wasserstoff- und Stickstoffbasis dissoziiert sind, und Halten des Gegenstands in der so erzeugten reaktiven Atmosphäre, um ihn zu erhitzen und um eine Diffusion von Kohlenstoff- oder Stickstoffatomen in die äußere Oberfläche (2) des Gegenstands zu erzielen,
und dass das Verfahren vor dem Schritt zum Erhitzen der im Behälter enthaltenen Verfahrensgase einen Reduktionsschritt umfasst, der darin besteht, den Gegenstand in einem Behälter zu platzieren, in den Diwasserstoff eingeleitet wird, und diesen Diwasserstoff zu erhitzen, was die Diffusion von in dem Gegenstand aus Zirkonoxid enthaltenen Sauerstoff in dessen Oberfläche ermöglicht, um ihn zu verlassen.

2. Verfahren nach Anspruch 1, **dadurch gekennzeichnet, dass** es ferner während des Schrittes zum Erhitzen der in dem Behälter enthaltenen Gase eine Diffusion des in dem Gegenstand aus Zirkonoxid enthaltenen Sauerstoffs zu seiner Oberfläche umfasst, um ihn zu verlassen.

3. Verfahren nach einem der Ansprüche 1 oder 2, **dadurch gekennzeichnet, dass** die Dicke der umgewandelten Schicht auf der äußeren Oberfläche (2) des Gegenstands im Bereich von 10 bis 1000 nm liegt.

4. Verfahren nach Anspruch 3, **dadurch gekennzeichnet, dass** die Dicke der umgewandelten Schicht der äußeren Oberfläche des Gegenstands im Bereich von 20 bis 200 nm liegt.

5. Verfahren nach einem der vorhergehenden Ansprüche, **dadurch gekennzeichnet, dass** das Widerstandselement aus einem hochschmelzenden Metall hergestellt ist, das aus der Liste ausgewählt ist, die Niob, Molybdän, Tantal, Wolfram und Rhenium umfasst.

6. Verfahren nach einem der vorhergehenden Ansprüche, **dadurch gekennzeichnet, dass** das Widerstandselement ein Filament (21) ist.

7. Verfahren nach einem der vorhergehenden Ansprüche, **dadurch gekennzeichnet, dass** der Behälter ein einzelnes Widerstandselement umfasst, das in dem Behälter angeordnet ist, um die Verfahrensgase und die zu bearbeitenden Gegenstände zu erhitzen, derart dass die Gegenstände gleichmäßig karburiert oder nitriert werden.

8. Verfahren nach einem der Ansprüche 1 bis 5, **dadurch gekennzeichnet, dass** der Behälter mehrere Widerstandselemente umfasst, die in dem Behälter verteilt sind, um die Verfahrensgase und die zu bearbeitenden Gegenstände zu erhitzen, derart, dass die Gegenstände gleichmäßig karburiert oder nitriert werden.

9. Verfahren nach einem der Ansprüche 1 bis 5, **dadurch gekennzeichnet, dass** mindestens eines der Verfahrensgase über mindestens ein Widerstandselement eingeleitet wird, das durch den durch sie fließenden elektrischen Strom erhitzt wird.

10. Verfahren nach einem der Ansprüche 1 bis 5, **dadurch gekennzeichnet, dass** mindestens eines der Verfahrensgase dissoziiert wird, bevor es in den Hauptbehälter eingeleitet wird.

## Claims

1. A method for obtaining a finished or semi-finished zirconia-based article, the article having a metallic external appearance and non-zero surface electrical conductivity, wherein the method includes the steps of:
- taking at least one zirconia article, pre-shaped in its finished or semi-finished form;
- placing said article in a chamber in which a gas mixture comprises atoms of hydrogen and of carbon or atoms of hydrogen and of nitrogen, the gas mixture being heated by at least one resistive element made of conductive material and traversed by an electrical current, and
- heating the gas mixture in the chamber to obtain dissociation of the hydrogen and carbon or nitrogen based gas molecules and keeping said article in the reactive atmosphere thus created in order to heat the article and obtain a diffusion of carbon/nitrogen atoms in the external surface of said article,
wherein prior to the step of heating the process gases contained in the chamber, a reduction step consisting in placing said article inside a chamber into which dihydrogen is injected and in heating the dihydrogen allowing diffusion towards the surface and release of the oxygen contained in said zirconia article.

2. The method according to claim 1, wherein the method further includes, during the step of heating the gases contained in the chamber, a diffusion towards the surface and release of the oxygen contained in said zirconia article.

3. The method according to claim 1, wherein the thickness of the transformed layer on the external surface of said article is comprised between 10 and 1,000 nm.

4. The method according to claim 3, wherein the thickness of the transformed layer on the external surface of said article is comprised between 20 and 200 nm.

5. The method according to claim 1, wherein said resistive element is made of a refractory metal selected from the list including niobium, molybdenum, tantalum, tungsten and rhenium.

6. The method according to claim 1, wherein said resistive element is a filament.

7. The method according to claim 1, wherein said chamber includes a single resistive element arranged inside the chamber for heating the process gases and the articles to be treated so as to carbide or nitride the articles in a homogeneous manner.

8. The method according to claim 1, wherein said chamber includes a plurality of resistive elements distributed inside the chamber for heating the process gases and the articles to be treated so as to carbide or nitride the articles in a homogeneous manner.

9. The method according to claim 1, wherein at least one of the process gases is injected via at least one resistive element heated by the electric current passing therethrough.

10. The method according to claim 1, wherein at least one of the process gases is dissociated before being injected into the main chamber.
